Europäisches Patentamt

European Patent Office

Office européen des brevets

(11) Publication number: **0 017 448**
**B1**

# EUROPEAN PATENT SPECIFICATION

(45) Date of publication of patent specification: **19.06.85**

(21) Application number: **80300988.5**

(22) Date of filing: **28.03.80**

(51) Int. Cl.⁴: **G 07 C 11/00, E 05 B 49/00,
G 08 B 25/00**

(54) **Electronic identification apparatus and identification system incorporating same.**

(30) Priority: **29.03.79 US 24964**

(43) Date of publication of application:
**15.10.80 Bulletin 80/21**

(45) Publication of the grant of the patent:
**19.06.85 Bulletin 85/25**

(84) Designated Contracting States:
**DE FR GB IT**

(56) References cited:
**US-A-3 806 874
US-A-3 829 833
US-A-4 047 107**

(73) Proprietor: **Walton, Charles A.
19115 Overlook Road
Los Gatos California 95030 (US)**

(72) Inventor: **Walton, Charles A.
19115 Overlook Road
Los Gatos California 95030 (US)**

(74) Representative: **Bluff, John William et al
c/o Lloyd Wise, Tregear & Co. Norman House
105-109 Strand
London, WC2R 0AE (GB)**

Courier Press, Leamington Spa, England.

## Description

This invention relates to a portable identifier for generating signals identifying said identifier and comprising an electronic identifier circuit for the signal generation. The invention also relates to an electronic identification system incorporating such an identifier, and to the use of a receiver unit for such an identifier.

An electronic identification and recognition system is disclosed in United States Patent US—A—3,752,960 issued to the present Applicant. Other identification systems or circuitry associated with such systems are disclosed in United States Patents US—A—3,832,530 (Reitboeck et al), US—A—3,438,489 (Cambornac et al), US—A—3,828,337 (Lichtblau), US—A—4,025,791 (Lennington) and US—A—4,047,156 (Atkins).

Identification circuits are also the subject of U.S. Patents US—A—3,806,874 (Ehrat), US—A—3,829,833 (Freeny) and US—A—4,047,107 (Dickinson). All these patents describe identifier units carried by the person for opening an electronic lock or otherwise gaining access to a secure area. All employ the generation of a coded train of pulses which has to be recognized as valid in a receiver unit for the lock or the like to be opened. To this end the units include a code store storing data representing a code sequence and timing means cooperable with the code store to cause the code sequence to be generated as a pulse train.

Dickinson employs a pulse modulated high frequency carrier to which coding is applied by pulse width modulation. This results in an on-off modulation since the pulses are triggered at predetermined regular intervals and last for only part of the interval. Freeny provides an electronic key that is activated and interrogated upon insertion into the electronic lock. The key emits a binary coded signal, that is a string of bits of values "1" or "0" represented by the presence or absence of a signal respectively, that is compared with the code stored in the lock. Ehrat describes a more elaborate system in which condition of validity is satisfied in two steps. Firstly the receiver (test station) sends a code which has to be recognized by the portable unit. If this step is satisfied the portable unit then emits its own code which has to be identified as valid in the receiver. The code from the portable unit is in two portions — one identifying the bearer of the unit and the other a "secret" portion. Ehrat also uses binary coding represented by the presence or absence of a signal. The pulse code can be sent in by a direct connection between the portable unit and the receiver or by inductive or radio couplings. Erhat and Freeny as well as Dickinson also rely on on-off modulation, the bits being timed by a clock. The three patents that have been discussed all provide a fixed code which is simply compared with stored data to determine whether the code is valid or not.

The present invention has been developed in connection with a portable identifier unit by which the identification of the bearer and other information can be sent to a central receiving station. In addition the information is sent by a different form of modulation which also allows the identifier to use transmission by radio while allowing the identifier to be also adapted for transmission over the telephone network.

The description given hereinafter will shown how the preferred practice of the present invention can be applied in an identification system so as to provide improved security to the user against unauthorized use by allowing for changeable coding, allowing the generation of an emergency signal for indicating that the user needs immediate personal assistance, allowing for transmission of special messages, displaying the device status and data reception. It is also possible to provide communication with the identifier through the telephone system, and provision can be made for visual and oral feedback to the user.

In the system to be described a personal portable identifier generates a signal which can be distinguished by a receiver from other signals to allow identification of the user. The identifier generating circuit is programmable by the user to alter the signal in a manner to guard against unauthorized use of the identifier or it would be used to send special information, such as Amount of Cash Withdrawn, Authorizations, and so forth. The identifier is also energizeable to generate an emergency signal indicating the user needs emergency assistance. For communication through the telephone system with a central unit, the identifier can be adapted to emit and possibly also, receive, audio signals. Identifier activity can also be displayed.

The invention provides in one aspect a portable identifier for generating signals identifying said identifier, comprising an electronic identifier circuit comprising a code store storing data representing a predetermined code sequence and timing means co-operable with said code store to cause said code sequence to be generated as a pulse train, characterized by:

a source of a primary frequency signal to which said timing means is responsive to generate said pulse train at a rate derived from the primary frequency,

a frequency dividing arrangement responsive to said primary frequency signal to generate a set of signals of differing secondary frequencies each lower in frequency than said primary frequency,

gating means acting as a modulator having an input connected to said primary frequency signal source to provide a carrier frequency signal, and

means for selectively coupling said frequency dividing arrangement to said modulator under the control of the code store such that the code sequence is generated as a modulated carrier pulse train by the selective modulation of said carrier frequency by said secondary frequencies in accord with the code.

In an implementation of the invention described below, the set of secondary frequencies is constituted by four frequencies and one of these four frequencies is selected to modulate the carrier at each pulse position. Thus the coding possibilities for a given total number of pulse positions in the code sequence is greater than is achievable by the binary codes previously discussed or the pulse width modulation.

In addition, the carrier and the modulating secondary frequencies are derived from one primary frequency. this technique enables the use of relatively simple circuitry to generate a complex identification signal and problems of timing are simplified because the signals are all generated from a single signal.

The code sequence may be constituted by a number of portions having different functions within the total sequence. Such a code portion may be allotted a plurality of pulse positions. The code sequence may include start and end code portions — stored in respective portions of the code store — whereby the reception of the code sequence in the receiver is recognized. The code store may also contain portions storing one or more different data items. One of these items may be fixed identification data and may be supplemented by another item that is settable by the user so as to change the code of a predetermined portion of the code sequence. Another portion of the code store may relate to a data item settable to one of two different states, one of which can be taken to represent a normal situation and the other representing an emergency situation, a change from one to other altering the code in a predetermined portion of the code sequence. This change may be effected by a user-actuable means coupled to the relevant store portion to set the data item into the aforesaid one (emergency) state.

Emergency provision may further include a power amplifier for the modulated carrier settable between relatively high and lower power conditions. The power amplifier is coupled to the aforementioned user actuable means to be settable into the higher power condition when the emergency state of the just-mentioned data item is selected.

To further distinguish the emergency condition it can be allocated a separate carrier frequency. To this end this identifier circuit may include a further frequency source operable at a frequency different to the primary frequency and switching means through which the above-mentioned input of the modulator is connected to the primary frequency source, the switching means being operable upon actuation of the user-actuable means to connect the modulator input to the further frequency source and disconnect the modulator input from the primary frequency source.

The identifier circuit of the invention may include a power source, such as a battery, for powering the circuit. Preferably where the circuit contains a store portion storing supplemental identification data, at least that store portion comprises electronic devices that retain the stored data item upon loss of power from the power source.

In a preferred embodiment the identifier circuit comprises an electro-acoustic transducer, such as a speaker, that is coupled to the aforesaid selective coupling means — that selectively gates the secondary frequencies to the modulator — for generating corresponding audio tones for transmission over a telephone network. The secondary frequencies are not restricted to being within the audio frequency range as far as modulating the carrier is concerned. If such frequencies lie outside the range of the telephone network, the transducer may be coupled to the selective coupling means via means, such as a counter device, to reduce the secondary frequencies so as to provide a corresponding set of frequencies suitable for transmission over the telephone network.

In another aspect of the invention there is provided an identification system that comprises in combination a portable identifier of the invention as defined in said above-mentioned one aspect and a receiver unit for receiving the modulated carrier frequency from the electronic identifier circuit of the identifier, the receiver unit comprising detector means to detect the modulation frequencies on said carrier; means to convert the detected modulation frequencies to a digital form code sequence corresponding to the coding applied in the identifier; storage means to store the digital form code sequence; and comparison means connected to the storage means to compare a code sequence stored therein with predetermined data held in the comparison means to provide signals dependent on the result of the comparison in order to identify the identifier from which the code sequence is received.

It will be realised that the receiver can produce various signals from a code sequence including signals indicating the validity of the received sequence and other signals dependent on variable portions of the code sequence.

The storage means of the receiver unit may be constituted by a shift register. The receiver unit may further comprise a phase-lock oscillator connected to the converter means of the unit to derive from the converter output shift signals for shifting the digital form code sequence into the shift register. Consequently the shifting is synchronized with reception of the code sequence.

As mentioned the code sequence may include start and end portions. The correct location of the code sequence in the register can be determined by parts of the comparison means connected to appropriate stages of the shift register.

In yet another aspect of the invention there is provided the use of a receiver circuit to receive the modulated carrier from an identifier of the invention as defined in said above-mentioned one aspect in order to identify said identifier therefrom, the receiver unit comprising means to detect the modulation frequencies on the received carrier;

means to convert the detected modulation frequencies to a digital form code sequence corresponding to the coding applied in the identifier;

a shift register to store the digital form code sequence;

a phase-lock oscillator connected to said converter means to derive shift signals from the digital form signals for shifting the digital form code sequence into the shift register; and

comparison means connected to said shift register to compare a stored said digital form code sequence with predetermined data to provide signals dependent on the result of the comparison in order to identify the identifier from which the receiver unit is receiving said modulated carrier frequency.

A preferred portable identification apparatus and a receiver for use therewith, together constituting an identification system in accord with the invention will now be described with reference to the accompanying drawings, in which:

Figure 1 is a perspective view of the identifier embodying the invention;

Figure 2 is a circuit diagram, partly in block form, of the circuit of the identifier;

Figure 3 is a circuit diagram of selected components of the circuit of Figure 2;

Figure 4 shows the portions of the circuit for modifying the identification code;

Figure 5 is a block diagram of a typical receiving station for processing the signal generated by the identifier; and

Figure 6 shows a telephone connection circuit (in block form) for relaying the identifier signal through a telephone line.

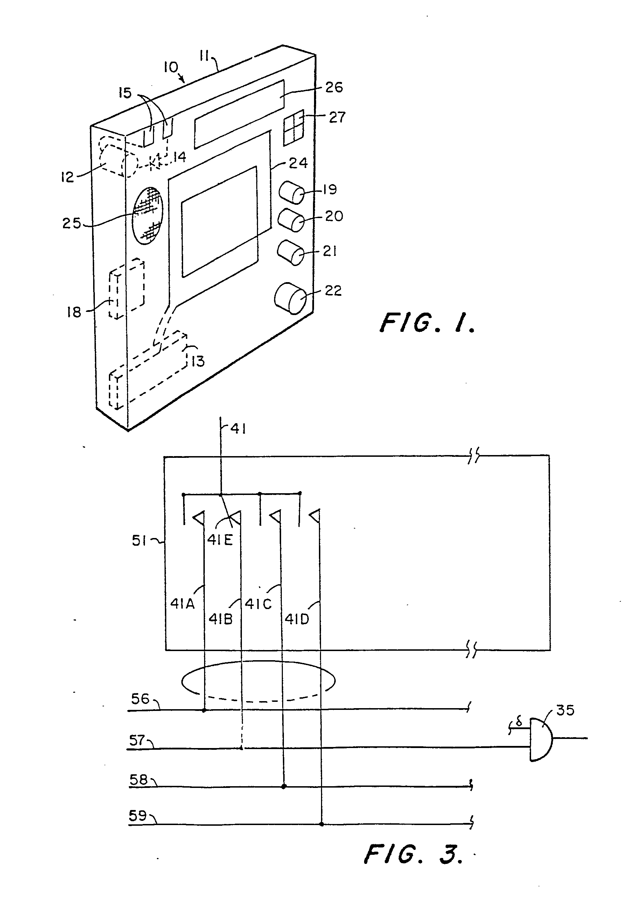

In Figure 1 is shown a signal-generating identifier 10. This signal generator is housed in a case 11 preferably made of plastics material and small enough to be easily carried in a shirt pocket or worn on the wrist. In general there is included in the case an electronic circuit 13, the operation and functioning of which will be explained later. This circuit is powered through electrical connections (not shown) made to a battery 12 which preferably is rechargeable.

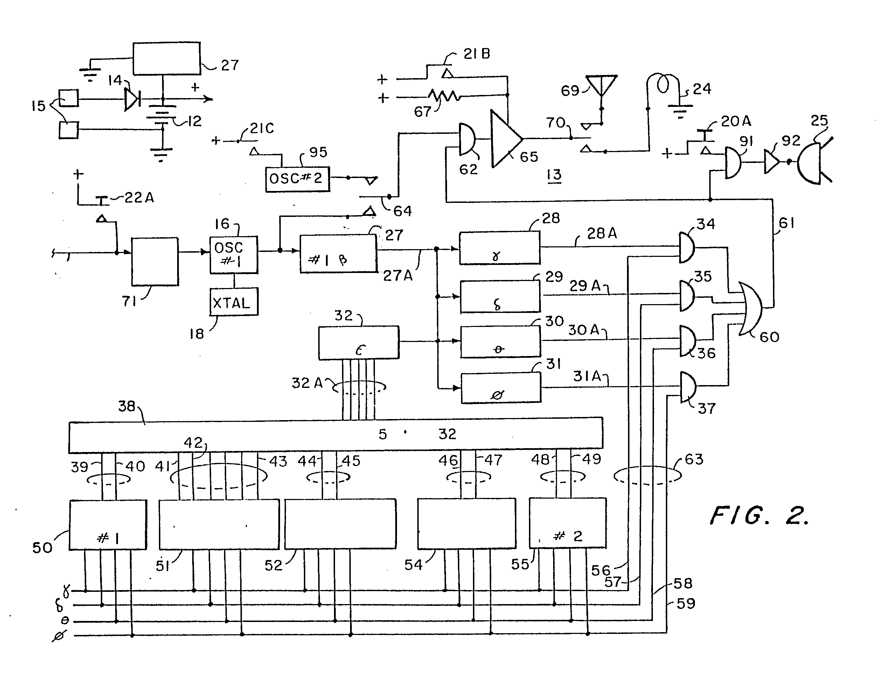

The circuit 13 contains as shown in Figure 2 a primary oscillator 16 and optional oscillator 95, the various counters 27, 28, 29, 30, 31, 32 and a repetition counter (not shown); an encoding group; a modulation group; power amplifiers; and control circuits. Coding is controlled by the encoding group to be adaptive in a manner to be described. There is a crystal 18 which co-operates with the oscillator circuit 16 to determine the radio frequency of a signal emitted by the identifier. Various switches 19, 20, 21 and 22 are provided which control the functioning of the identifier in the manner described later. In addition a magnetic dipole antenna 24 is selectively connectable to the electronic circuit 13 for radiation of the radio frequency signal generated, the signal being code modulated in a manner to be described. A speaker 25 and a display 26 are provided and an optional solar cell 27 is connected to the battery for recharging purposes. Not shown is a microphone providing the optional function of receiving data from a telephone.

The block diagram of Figure 2 is one embodiment of the circuit which can be used in the identifier 10. The primary purpose of this circuit is to permit generation of a signal which is distinguishable from all other signals of such signal generators. Shown therein is the battery 12 connected to the diode 14 and the recharging contacts 15 described later. The switch 22, when actuated, energizes flip-flop 71 and thus the oscillator 16 for the generation of a constant frequency signal which is transmitted to a counter 27. Ten megahertz is a suitable example frequency for the signal fed through the counter 27 for the generation of a second signal beta having a frequency that is a sub-multiple of the original constant frequency signal. This signal is transmitted simultaneously to a plurality of counters 28, 29, 30, 31 and 32 which divide the frequency by different values. The output signals of counters 28, 29, 30 and 31 are lesser frequencies and are transmitted by conductors 28A, 29A, 30A and 31A respectively, to AND gates 34, 35, 36 and 37. Thus the beta frequency signal can be regarded as a primary signal from which four secondary signals of different frequencies are derived. One signal is supplied for triggering one input of each AND gate 34, 35, 36 and 37 from the counters 28, 29, 30 and 31. The manner of generation of the other input for each AND gate will be described hereinafter. The function of the output signal of counter 32 is next described.

Preferably counter 32 has the lowest frequency output of all the counters. The most significant bits of counter 32, five bits in this example, are supplied over lines 32A to the decoder 38. This decoder is of standard 5 line to 32 line design and in the example shown, the five most significant bits are received through the five parallel lines making up the conductor 32A. The decoder expands these five parallel lines into a multiplicity of output lines. These lines are numbered 39 through 49. For each five bit input signal to the decoder 38, one of the 32 output lines or signals is selected. As counter 32 advances, the 32 output lines are sequentially energized or "UP" and sequentially stimulate the intelligence-containing switch circuits 50, 51, 52, 54 and 55. All 32 output lines are not illustrated but those lines that are illustrated are described as an example of how the circuits function.

The eleven lines that are shown are numbered 39 through 49. Each line is responsible for selecting one of four signal frequencies which are respectively designated gamma, delta, theta or phi. The four frequencies are those generated by counters 28—31 respectively. Because the lines 39—49 are selected in a time sequence as the counter 32 advances, a sequence of frequencies is likewise selected from among the four mentioned. The particular frequencies of the sequence depend on the intelligence or data set in units 50, 51, 52, 54 and 55 to which the lines 39—49 are connected as shown in Figure 2. These units are each connected to four further lines 56—59 respectively associated with the four mentioned frequencies and activate a selected one of these lines for any input line that is active (UP) in accord with the data set in the unit in question.

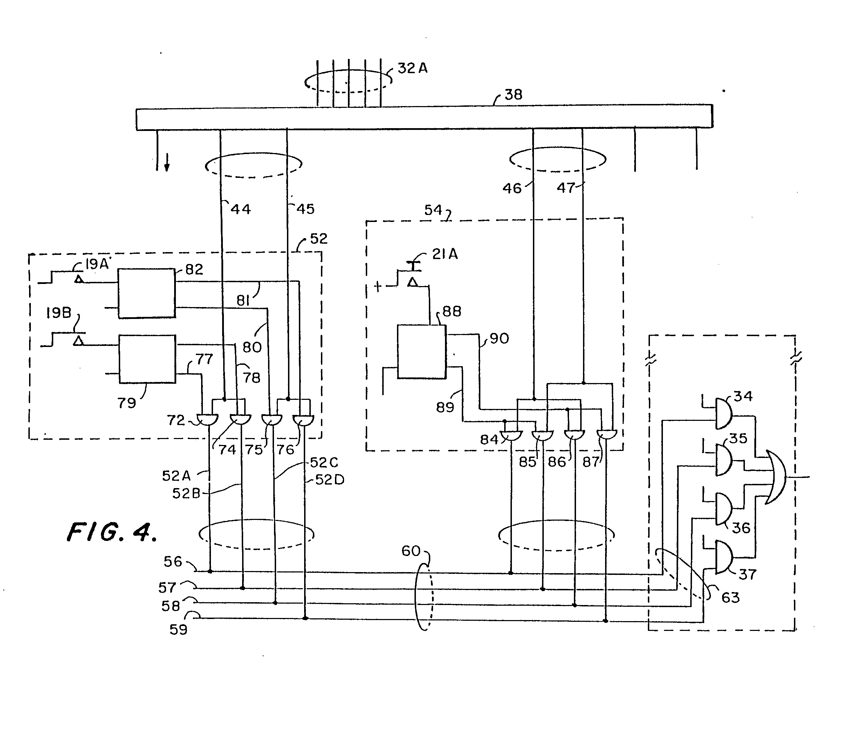

To illustrate, in Figure 3, line 41 is shown and within identification data box 51 line 41 may exit on any of four lines 41A, 41B, 41C and 41D (shown as a trunk line), according to the bit of intelligence allocated to that line. In the example of Figure 3, line 41B is selected.

Line 41B is connected to line 41 by a switch 41E, and lines 41A, 41C and 41D are not connected. In practice, this selective connection would be achieved by a fusible semiconductor link, or equivalent technology, and in practice a standard read-only memory, or ROM, might be used. This ROM would incorporate part of the decoding function performed by decoder 38. Line 41A is connected to line 57 which is connected to AND gate 35. Thus when line 41 is energized (or UP) in proper sequence, line 57 is UP, AND gate 35 is ON, and the frequency signal (delta) of counter 29 is passed through the gate 35 and the rest of the system. Similarly, lines 39 to 49 in turn may select and energize any one of the four lines 56, 57, 58 or 59. It is within boxes 50, 51, 52, 54 and 55 that the intelligence selection is made. Lines 39 to 49 are sequentially energized and at each step of the sequence, one of the four lines 56, 57, 58 or 59 is energized and consequently one of the four frequencies, gamma, delta, theta or phi, is transmitted from the AND gates 34, 35, 36 or 37. The individual parts of switching circuits 50, 51, 52, 54 and 55 are set open or closed for conduction of the signals received in accordance with predetermined programming and in that manner, determine the codes which control transmission of selected frequency signals through the AND gates 34, 35, 36 and 37 connected to the outputs of counters 28—31 respectively.

Thus as the decoder 38 functions responsive to the signal from the counter 32, the switching circuits 50, 51, 52, 54 and 55 transmit the sequence of decoder signals in accordance with a coded switching sequence within each switching circuit. Thus the AND gates 34, 35, 36 and 37 are closed in coded sequence for the transmission of bursts of the signals received through the conductors 28A, 29A, 30A and 31A. As can be seen, both the decoder signals and the counter signals are generated responsive to the single frequency from the stable oscillator 16 thereby eliminating timing or frequency error considerations.

In operation the decoder 38 advances sequentially through the various positions of the output lines such that these output lines 39 through 49 are energized in sequence. The bit rate of the signal transmitted from the decoder, and hence the bit rate of the radiated signal, is the frequency of the fifth most significant bit signal emitted from the counter 32 which in turn is a division of the signal rendered by the oscillator 18A. Thus each of the counter signals are synchronized by the fact that they derive the respective signals from the basic oscillator signal. The bit rate derived from counter 32 will be referred to as epsilon.

With the triggering of one of the AND gates 34, 35, 36 or 37, a signal is transmitted to the OR gate 60 and from there through the conductor 61 to the AND gate 62. In addition there is supplied to the AND gate 62 the signal from the oscillator 16 through the switch 64 for transmission via the AND gate 62 to the amplifier 65. Thereafter the signal is supplied to the switch 70 for transmission to the loop antenna 24. An alternative electric dipole antenna 69 is also provided for purposes to be explained later and is selectably connected in the circuit by the switch 70.

Thus the four frequency signals generated by the counters 28, 29, 30 and 31 modulate the radio frequency signal emitted by the antenna 24, in accordance with the programming of the units 50, 51, 52, 54 and 55. The frequency signals are supplied to one terminal of the AND gates 34, 35, 36 and 37 on a constant basis and the switching circuits, acting through the bus 63, act to open the respective gates in a coded sequence for the transmission of bursts of the frequency signals.

The identification data circuit 51 preferably is programmed at the time of assembly or at the time of first use and serves to generate a signal identifying the particular identifier and therefore the user. When the identifier is acquired, that identification programmed into the circuit 51 is assigned to the user such that all communications therefrom will be correlated with the particular user. Each of the control circuits and the identification circuit serve to energize the conductors of the bus 63 in a predetermined coded sequence for the transmission of the frequency signals through the respective AND gates in a preprogrammed sequence.

The control data circuits 50 and 55 are provided to synchronize the receiving system which is capable of receiving and identifying data signals. Control data circuits 50 and 55 are set permanently to notify the receiving system and inform the receiver that data transmission is being initiated and thereafter that the data transmission is being terminated. Circuits 50 and 55 are described in more detail below.

Communication with a receiver in a central unit is initiated by actuation of the button 22 or by an interrogation signal. Button 22 closes a switch 22A and sets the flip-flop 71. The flip-flop times the signal generation of the identifier so that a predetermined number of cycles of the radiated coded signal is achieved. Such operation assures that the central communicator sensing the signal receives a sufficient number of cycles to practically eliminate the possibility of erroneously identifying the user.

A feature of the identifier illustrated is that it can be personally reprogrammed by the user so as to change the output signal in a manner to reduce the possibility of unauthorized use of the users coded sequence of frequencies. The circuit allowing the reprogramming is shown in Figure 4. The capability to reprogram substantially prevents unauthorized use of a similar signal without having possession of the identifier as might occur if the identifier signal was prerecorded. If the code was permanent and recorded by an illicit receiver, forgery of the personal code would be possible. However, with periodic changing of the code and the reporting of this change to the central receiving system, such forgery is made difficult if not impossible.

For this purpose the programmable data circuit 52 can be changed by the user with the actuation of the button 19 (Figure 1). As shown in Figure 4, the programmable data circuit 52 receives decoder 38 signals via conductors 44 and 45. Additionally the circuit communicates with the bus 63 through the conductors 52A, 52B, 52C and 52D. Transmission of the signals from the conductors 44 and 45 to the bus 60 is regulated by the AND gates 72, 74, 75 and 76. The signal from the conductor 44 is supplied to the AND gates 72 and 74 while the signal from the conductor 45 is supplied to the AND gates 75 and 76. To the other terminal of the AND gates 72 and 74 is supplied a signal through the conductors 77 and 78 from a memory flip-flop 79. Similarly the other terminal of the AND gates 75 and 76 is connected through the conductors 80 and 81 to a memory flip-flop 82. The setting of the flip-flops 82 and 79 is controlled by the switches 19A and 19B which are actuated by the switch 19. The flip-flops can be set and reset by the setting of the switch 19 to modify the code. The setting procedure is analogous to that of setting the time in an electronic wristwatch.

The effect on system performance is as follows. When line 44 is energized (or UP) AND gates 72 and 74 are half selected. If flip-flop 79 is set, line 78 is UP, then AND gate 74 is fully selected and via line 52B, line 57 is UP and AND gate 35 is selected and the output frequency is delta. If, however, flip-flop 79 had not been set (reset), AND gate 72 would then be half selected so that an UP condition on 44 energizes 52A which energizes line 56 and gate 34 to cause transmission of the output frequency gamma. Thus the flip-flop position determines which frequency is to be transmitted in a given code position. Similarly the setting of flip-flop 82 determines which frequency is transmitted when the next bit position, equivalent to line 45, is energized.

Such changes in user programming must be reported to allow the central unit to respond properly and to distinguish between forged signals and legitimate signals. The user may report the change from only certain selected secure terminals such as can be located in his home or the office, with optional auxiliary procedures. Alternatively the change may be reportable only during certain time periods of the day known only to the user. Other procedures such as alternative switches on the identifier added for additional security, will occur to one skilled in the art. Such switches having multiple settings could be used much like a combination lock requiring that preselected settings be made before a proper transmission to the central receiver can be achieved. A significant feature of flip-flops 79 and 82 is that they are of the extremely low energy drain type, such as are used in certain miniature electronic calculators and wristwatches, so that the stored settings remain for long intervals even though the main power is off.

Another feature of the illustrated identifier is that it can be energized to emit an emergency signal which is communicated to a central communicating unit and thence to any emergency services organization such as a fire or police station. It is anticipated that such an emergency signal could denote that the user is in need of immediate emergency aid such as being involved in an automobile accident or other mishap or possibly in the event of a serious physical malady such as a heart attack.

Such emergency action is initiated by pressing the button 21 to cause one or all of the following changes. The contacts 21B (Figure 2) of switch 21 are closed by actuation of the button 21 which shorts out the resistor 67 and increases the power input to the amplifier 65. By raising the amplification level of this amplifier, the signal strength is increased as may be necessary because of the emergency situation and the possibility that the user is remote to a central receiver. It is realized that the increase in amplification will deplete the battery faster but such may be warranted under such conditions. The frequency for the emergency signal may be one approved by the appropriate licensing authority for industrial-medical-scientific purposes or one selected especially for emergencies. To minimize the rate of battery depletion the repetition rate of the emergency signal may be reduced to one transmission per second or a similar slow rate.

In order to make the emergency signal situation recognizable to the central receiver station, several bits of the internal data in known bit timing positions, are changed or recoded. In Figure 4, pole 21A of switch 21 also contacts and the flip-flop 88 is moved from the reset mode to the set mode and the AND gates 84 and 85 are turned off (de-energized) and the AND gates 86 and 87 are turned on. The bit position represented by the decoder output line 46 and that represented by the line 47 in non-emergency conditions cause the transmission of the frequency signals gamma and delta in that order, via lines 56 and 57 and the AND gates 34 and 35. In emergency conditions, however, the lines 46 and 47 will act through AND gates 86 and 87 to energize lines 58 and 59 and as a consequence, the modulation frequencies theta and phi will be transmitted through the gates 36 and 37. The central receiving device has the capability to recognize the differing frequencies and consequently signal the need for appropriate emergency action. Associated with the emergency data is the identification of the individual from the data group 51.

Switch 21 also includes a pole 21C (Figure 2). This pole will turn on the oscillator 95 and operate the double throw contacts 64, so that a different radio frequency is supplied to the antenna network. This new radio frequency will be one which has been dedicated to emergency service. At the same time that the value of the radio frequency has been changed, the double throw contacts 70 are operated to select the preferred antenna 24 or 69 in a manner chosen to optimize the radio field strength and consequent range of operation.

A further feature of the illustrated identifier is that it can be used to transmit the signal by telephone, as well as through the antenna, by use of the speaker 25. For this purpose there is provided the switch 20 which when actuated, closes the contacts 20A to set one terminal of the AND gate 91. Thereafter any signal supplied through the conductor 61 passes through the AND gate 91 and the amplifier 92 to the loudspeaker 25. With the identifier held adjacent the receiver of a telephone, the audio signal is transmitted by sound through the telephone system. In actual practice the modulation frequencies of the radio signal may be greater than the actual bandwidth of the telephone line so that it might be necessary to insert an additional counter (not shown) between the counter 27 and the conductor 27A, which counter would serve to reduce all frequencies of the output signal to a value within the bandwidth of the telephone line.

As a further extension of the use of the personal identifier system, telephone sets can be equipped with a miniature radio frequency receiving circuit, set to receive identifier frequencies. A signal from the identifier, of either an emergency or a normal frequency, will automatically initiate transmission of appropriate audio codes over the telephone lines. Thus, reporting of emergencies or simply of the location of the user can readily occur throughout much of the country by use of present technology.

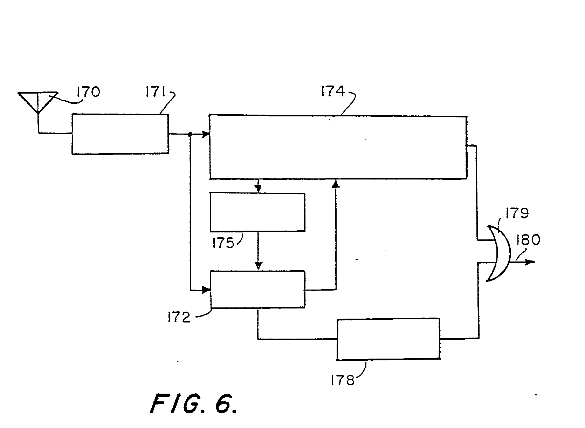

Figure 6 illustrates a telephone relay system. The antenna 170 and receiver 171 receive data from the idenfifier, and signal the control element 172 and the data is shifted into the shift register 174. The data is analyzed by the analyzer 175 to detect the emergency data, or any special data which requires use of the telephone system. If telephone use is indicated, the control element 172 initiates automatic dialling to police, fire, medical or other services via the automatic dialler 178 and once the connection is established, transmits the stored data from the shift register 174 to the telephone line 180. The OR gate 179 accepts either shift data or dialling signals for transmission through the line 180. Thereafter the data is processed as previously described.

The battery 12 can be recharged through contacts 15 and diode 14. The contacts 15 can either be flat conductors such as those shown, or in the form of a female connector of a suitable type (not shown), so the connection can be made to a power source for recharging the battery. The diode 14 prevents a rapid discharge of the battery if the contacts are shorted as might occur with coins in the pocket holding the identifier.

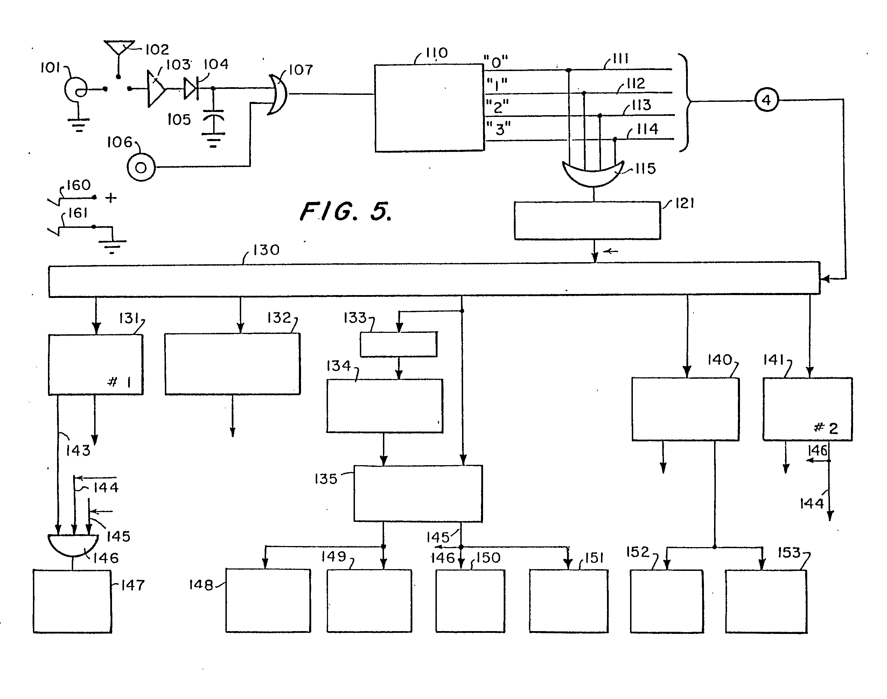

Contacts 160 and 161 in the receiver shown in Figure 5 provide a recharging voltage to contacts 15.

To provide the identification message with a clearly defined beginning and end, the components 50 and 55 of Figure 2 contain codes identifying the limits of the signal. The initial bits for a message are generated in the control box 50. These bits preferably are in a series of a certain length and nature, such as alternating gamma and delta frequencies, to allow the receiver to "lock on" to the message. "Lock on" means that the receiver detects that a message has been initiated and causes the receiver internal bit clock to synchronize with the bit rate of the signal being received from the identifier. A phase locked oscillator is typically part of the receiver circuit. Code steps and wires 39 and 40 are illustrated entering this control box; in practice a greater number of steps (and bits) are required to bring about this initial synchronization. At the conclusion of the identification message, control data codes are entered by box 55. A short burst of alternating theta and phi frequencies are one choice to mark the end of the data transmission. Also, to increase the degree of reliability, there can be included at the end of the message a parity bit and codes useful for error detection and error correction, well-known in the art.

An identification system incorporating one or more identifiers of the kind described also requires a co-operating receiver remotely located at, for example, a central station. In Figure 5 are shown the pertinent primary elements of one receiver system suitable for receiving and responding to the identification codes previously described. The data signal is received on a radio frequency loop antenna 101, or an electric dipole antenna 102, or from a microphone 106. If the signal is radio frequency, it is converted to audio/video frequencies by amplifier 103, detector 104 and a capacitor 105. The alternative data signals pass through the OR gate 107 to the audio frequency detector 110. This detector may be a conventional linear filter, or a synchronous detector, or a digital filter. The outputs therefrom are "0", "1", "2" or "3", corresponding to the frequencies gamma, delta, theta or phi, and appear on lines 111, 112, 113 and 114 in accordance with the manner the frequencies appear in the signal received.

All of the frequency signals are sent through the OR gate 115 to a phase-locked oscillator 121 which runs at the data bit rate epsilon. The set of four signals on line 116 is transmitted to the shift register 130 and the bits are shifted in by the phase locked oscillator 121. The bits move from right to left in the register at a normal transmission rate and then stop when the first control bit reaches the proper register position. The bit positions in the register now correspond to the bit positions of decoder 38 in the identifier. With the information in the register, it is now ready to be analyzed. In practice, there preferably would be multiple identifier transmissions for reasons of reliability, so the register 130 in that instance would serve as a memory to enable the comparing of several transmissions prior to analysis.

The control bits are first compared in logic units 131 and 141 and if there is proper agreement and a correct validity check, data processing can proceed. Next the emergency bits are compared with the pre-established emergency bits, in logic unit 140. If the emergency bits agree or match, an alarm is actuated. Next the personally changeable or modifiable bits are compared in comparator 135 against the correct values stored earlier. If these agree further data processing can proceed. Under certain predetermined and "privileged" conditions, gate 133 is open or ON, to allow the "personally changeable" bits to be set from the identifier. Once set, they remain fixed and stored in 134 until the next privileged change. As explained previously, such changes serve to frustrate forgers by preventing illicit recording and later unauthorized usage of the identification code. Once the message passes the foregoing tests, the individual identification bit appearing at the logic identification 132 may be sent to a data processor (not shown) for appropriate decisions, such as credit approval, or actuation of any device or signal (not shown).

It is highly desirable that the system include an "answer back" feature, that is the user be quickly informed about the reception of his message. In fact, the user should not leave the area of the receiver until this acknowledgement has been obtained. Several visible and corresponding audible signals are appropriate for the acknowledgement. A visible "OK" signal 147 is energized if there is simultaneous agreement of control bits No. 1 on line 143, control bits No. 2 on line 144 and valid changeable bit on line 145. The AND gate 146 reports this condition to the signal generator 147. Disagreements on the personally changeable bits cause the operation of an audible alarm 148 and illumination of a visible red signal 149. Agreement on the emergency signal bits cause an audible alarm 152 and a visible alarm 153 to operate.

A component of the receiver not shown but readily added by one skilled in the art, is an automatic gain control. If several identifiers transmit to the same receiver simultaneously, the automatic gain control will function so that the nearest and strongest signal identifier has its data processed by the receiver first.

A further variation and extension of the identifier allows the identifier to receive data as well as being triggered externally as described previously. This received data may be shown on the display 26 of the identifier in the typical manner of operation for such display devices such as electronic digital watches. Other reporting ability might be included in the identifier, such as biological data or credit requests and changes.

Another variation (not shown) is to mount the identifier on the wrist in a manner like that of an electronic wristwatch. A short antenna may be extended up the forearm to increase the effective radiation range.

Claims

1. A portable identifier for generating signals identifying said identifier, comprising an electronic identifier circuit comprising a code store (50—55) storing data representing a predetermined code sequence and timing means (32 and 38) co-operable with said code store (50—55) to cause said code sequence to be generated as a pulse train, characterized by:
a source (16) of a primary frequency signal to which said timing means (32 and 38) is responsive to generate said pulse train at a rate derived from the primary frequency,
a frequency dividing arrangement (29—31) responsive to said primary frequency signal to generate a set of signals of differing secondary frequencies each lower in frequency than said primary frequency,
gating means (62) acting as a modulator having an input connected to said primary frequency signal source to provide a carrier frequency signal, and
means (34—37 and 60) for selectively coupling said frequency dividing arrangement to said modulator under the control of the code store such that the code sequence is generated as a modulated carrier pulse train by the selective modulation of said carrier frequency by said secondary frequencies in accord with the code.

2. A portable electronic identifier as claimed in Claim 1, characterized in that said code store (50—55) contains portions storing different data items together defining the code sequence, one store portion (51) storing fixed identification data.

3. A portable electronic identifier as claimed in Claim 2, characterized in that another store portion (52 or 54) stores a data item that is changeable by the user to change the code of a predetermined portion of the code sequence.

4. A portable electronic identifier as claimed in Claim 3 in which said other store portion (52) stores a data item settable by the user as a supplement to the fixed identification data.

5. A portable electronic identifier as claimed in Claim 3 characterized in that said other store portion (54) stores a data item settable to two different states, one of which represents an emergency situation in said predetermined portion of code sequence, and further characterized by user-actuable means (21) coupled to said other store portion (54) to set said changeable stored data item thereof into said one state.

6. A portable electronic identifier as claimed in Claim 5 further characterized by a power amplifier (65) settable to relatively high and low power conditions, said power amplifier being coupled (21B) by said user-actuable means (21) to be settable into the higher power condition when the stored data item in said other circuit portion (54) is set into said one state.

7. A portable electronic identifier as claimed in Claim 5 or 6 characterized by a further frequency source (95) operable at a frequency different to said primary frequency; and

switching means (64) through which said input of said modulator (62) is connected to the primary frequency source, said switching means being operable upon actuation of said user actuable means to connect said modulator input to said further frequency source, and disconnect said modulator input from said primary frequency source.

8. A portable electronic identifier as claimed in Claim 3 further characterized by a power source (12) to supply electrical power to the circuit, and in that said other store portion comprises storage elements that retain the stored data item upon a loss of power from the power source.

9. A portable electronic identifier as claimed in any preceding claim further characterized by an electro-acoustic transducer (25) and further coupling means (91 and 92) coupling the transducer (25) to said selective coupling means (34—37 and 60) to generate in the transducer audio frequencies corresponding to said secondary frequencies suitable for transmission over a telephone network.

10. An identification system comprising in combination

a portable identifier as claimed in any one of Claims 1 to 9; and

a receiver unit for receiving the modulated carrier frequency said receiver unit comprising:

means (104 and 105) to detect the modulation frequencies on said carrier;

means (110) to convert the detected modulation frequencies to a digital form code sequence corresponding to the coding applied in the identifier;

storage means (130) to store said digital form code sequence;

comparison means (131, 132, 135, 140 and 141) connected to said storage means (130) to compare a code sequence stored therein with predetermined data to provide signals dependent on the result of the comparison in order to identify the identifier from which the code sequence is received.

11. An identification system as claimed in Claim 10 characterized in that the storage means (130) of said receiver unit comprises a shift register;

the receiver unit further comprising a phase-lock oscillator (121) connected to said converter means (110) to derive from the output thereof shift signals for shifting the digital form code sequence into the shift register.

12. The use of a receiver unit to receive the modulated carrier frequency from an identifier that is as claimed in Claim 1 in order to identify said identifier therefrom, said receiver unit comprising means (104 and 105) to detect the modulation frequencies on the received carrier;

means (110) to convert the detected mdulation frequencies to a digital form code sequence corresponding to the coding applied in the identifier;

a shift register (130) to store the digital form code sequence;

a phase-lock oscillator (121) connected to said converter means to derive shift signals from the digital form signals for shifting the digital form code sequence into the shift register; and

comparison means connected to said shift register to compare a stored said digital form code sequence with predetermined data to provide signals dependent on the result of the comparison in order to identify the identifier from which the receiver unit is receiving said modulated carrier frequency.

**Revendications**

1. Identificateur portatif permettant de produire des signaux identifiant ledit identificateur, comprenant un circuit identificateur électronique comprenant une mémoire de codage (50—55) emmagasinant des données qui représentent une séquence de codage prédéterminée et un moyen de synchronisation (32 et 38) pouvant coopérer avec ladite mémoire de codage (50—55) pour produire ladite séquence de codage sous forme d'un train d'impulsions, caractérisé par:

une source (16) d'un signal de fréquence primaire auquel ledit moyen de synchronisation (32 et 38) répond en produisant ledit train d'impulsions à un rythme déduit de la fréquence primaire,

un dispositif (29—31) de division de fréquence répondant audit signal de fréquence primaire en produisant un ensemble de signaux ayant des fréquences secondaires différentes dont chacune plus basse que ladite fréquence primaire,

un moyen (52) de type porte faisant fonction de modulateur dont une entrée est connectée à ladite source de signal de fréquence primaire de façon à produire un signal de fréquence de porteuse, et

un moyen (34—37 et 60) servant à coupler sélectivement ledit dispositif de division de fréquence audit modulateur sous commande de la mémoire de codage de façon que le séquence de codage soit produite sous forme d'un train d'impulsions de porteuse modulée par le modulation sélective de ladite fréquence porteuse par lesdites fréquences secondaires en fonction du codage.

2. Identificateur électronique portatif selon la revendication 1, caractérisé en ce que ladite mémoire de codage (50—55) contient des parties qui emmagasinent des données différentes définissant ensemble la séquence de codage, une partie (51) de la mémoire emmagasinant une donnée d'identification fixe.

3. Identificateur électronique portatif selon la revendication 2, caractérisé en ce qu'une autre partie de mémoire (52 ou 54) emmagasine une donnée qui peut être modifiée par l'utilisateur pour changer le codage d'une partie prédéterminée de la séquence de codage.

4. Identificateur électronique portatif selon la revendication 3, dans lequel ladite autre partie de mémoire (52) emmagasine une donnée pouvant être positionnée par l'utilisateur en plus de la donnée d'identification fixe.

5. Identificateur électronique portatif selon la revendication 3, caractérisé en ce que ladite autre partie de mémoire (54) emmagasine une donnée pouvant être positionnée sur deux états différents, dont l'un représente une situation d'urgence dans ladite partie prédéterminée de la séquence de codage, et caractérisé en outre par un moyen (21) pouvant être actionné par l'utilisateur et couplé à ladite autre partie de mémoire (54) pour positionner ladite donnée emmagasinée pouvant être modifiée dans ledit premier état.

6. Identificateur électronique portatif selon la revendication 5, caractérisé en outre par un amplificateur de puissance (65) pouvant être positionné dans des états de puissance relativement haut et bas, ledit amplificateur de puissance étant couplé (21B) par ledit moyen (21) pouvant être actionné par l'utilisateur de façon à pouvoir être positionné dans l'état de puissance plus élevé lorsque la donnée emmagasinée dans ladite autre partie die circuit (54) est positionnée dans ledit premier état.

7. Identificateur électronique portatif selon la revendication 5 ou 6, caractérisé par une source de fréquence supplémentaire (95) pouvant être actionnée à une fréquence qui diffère de ladite fréquence primaire; et

un moyen de commutation (64) par lequel ladite entrée dudit modulateur (62) est connectée à la source de fréquence primaire, ledit moyen de commutation pouvant entrer en service lors de l'actionnement par ledit utilisateur du moyen pouvant être actionné de façon à connecter ladite entrée du modulateur à ladite source de fréquence supplémentaire et à déconnecter ladite entrée du modulateur vis-à-vis de ladite source de fréquence primaire.

8. Identificateur électronique portatif selon la revendication 3, caractérisé en outre par une source de puissance (12) permettant de fournir l'alimentation électrique du circuit, et en ce que ladite autre partie de mémoire comprend des éléments d'emmagasinage qui conservent la donnée emmagasinée lors d'une coupure d'alimentation de la source de puissance.

9. Identificateur électronique portatif selon l'une quelconque des revendications précédentes, caractérisé en outre par un transducteur électro-acoustique (25) et un moyen de couplage supplémentaire (91 et 92) qui couple le transducteur (25) audit moyen de couplage sélectif (24—37 et 60) afin de produire dans le transducteur des fréquences acoustiques correspondant auxdites fréquences secondaires adaptées à la transmission sur un réseau téléphonique.

10. Système d'identification comprenant, en combinaison:

un identificateur portatif selon l'une quelconque des revendications 1 à 9; et

une unité réceptrice servant à recevoir la fréquence de porteuse modulée, ladite unité réceptrice comprenant:

un moyen (104 et 105) servant à détecter les fréquences de modulation sur ladite porteuse;

un moyen (110) servant à convertir les fréquences de modulation détectées en une séquence de codage de forme numérique correspondant au codage appliqué dans l'identificateur;

un moyen d'emmagasinage (130) servant à emmagasiner ladite séquence de codage sous forme numérique;

un moyen de comparaison (131, 132, 135, 140 et 141) connecté audit moyen d'emmagasinage (130) de façon à comparer une séquence de codage emmagasinée dans celui-ci avec une donnée prédéterminée afin de produire des signaux en fonction du résultat de la comparaison pour identifier l'identificateur duquel la séquence de codage a été reçue.

11. Système d'identification selon la revendication 10, caractérisé en ce que le moyen d'emmagasinage (130) de ladite unité réceptrice comprend un registre à décalage;

l'unité réceptrice comprenant en outre un oscillateur à verrouillage de phase (121) connecté audit moyen convertisseur (110) de façon à produire à partie du signal de sortie de celui-ci des signaux de décalage permettant de décaler la séquence de codage sous forme numérique dans le registre à décalage.

12. Utilisation d'une unité réceptrice destinée à recevoir la fréquence de porteuse modulée d'une identificateur tel que décrit dans la revendication 1 afin d'identifier, à partir de celle-ci, ledit identificateur, ladite unité réceptrice comprenant un moyen (104 et 105) servant à détecter les fréquences de modulation sur la porteuse reçue;

un moyen (110) servant à convertir les fréquences de modulation détectées en une séquence de codage de forme numérique correspondant au codage appliqué à l'identificateur;

un registre à décalage (130) servant à emmagasiner la séquence de codage de forme numérique;

un oscillateur à verrouillage de phase (121) connecté audit moyen convertisseur de façon à produire des signaux de décalage à partir des signaux de forme numérique afin de décaler la séquence de codage de forme numérique dans le registre à décalage; et

un moyen de comparaison connecté audit registre à décalage afin de comparer une dite séquence de codage de forme numérique emmagasinée avec une donnée prédéterminée pour produire des signaux qui sont fonction du résultat de la comparaison, de manière, à identifier l'identificateur à partir duquel l'unité réceptrice reçoit ladite fréquence de porteuse modulée.

**Patentansprüche**

1. Tragbare Kennungsvorrichtung zur Erzeugung von die Kennungsvorrichtung identifizierenden Signalen mit einem elektronischen Identifizierungsschaltkreis, welcher eine Codespeichervorrichtung (50—55), die eine vorwählbare Codesequenz darstellende Daten speichert, und eine Zeitgebervorrichtung (32 und 38) umfaßt, die mit der Codespeichervorrichtung (50—55) zur Erzeugung der Codesequenz als Impulskette zusammenwirkt, gekennzeichnet durch

eine Quelle (16) eines primären Frequenzsignales, auf welches die Zeitgebervorrichtung (32 und 38) zur Erzeugung der Impulskette mit einer von der primären Frequenz abgeleiteten Rate reagiert,

eine Frequenzteileranordnung (29—31), welche auf das primäre Frequenzsignal zur Erzeugung eines Satzes von Signalen unterschiedlicher sekundärer Frequenz reagiert, welche sämtlich eine niedrigere Frequenz aufweisen als die primäre Frequenz,

eine als Modulator arbeitende Schaltvorrichtung (62), welche einen mit der Quelle des primären Frequenzsignales verbundenen Eingangsanschluß aufweist, zur Bereitstellung eines Trägerfrequenzsignales, und

eine Vorrichtung (34—37 und 60) zur selektiven Ankopplung der Frequenzteileranordnung an den Modulator unter der Steuerung der Codespeichervorrichtung derart, daß die Codesequenz als modulierte Trägerimpulskette durch die selektive Modulation der Trägerfrequenz durch die sekundären Frequenzen gemäß dem Code erzeugt wird.

2. Tragbare elektronische Kennungsvorrichtung gemäß Anspruch 1, dadurch gekennzeichnet, daß die Codespeichervorrichtung (50—55) Abschnitte umfaßt, welche unterschiedliche Datenposten zusammen speichern, die die Codesequenz definieren, wobei ein Speicherabschnitt (51) feste Kennungsdaten speichert.

3. Tragbare elektronische Kennungsvorrichtung gemäß Anspruch 2, dadurch gekennzeichnet, daß ein anderer Speicherabschnitt (52 oder 54) einen Datenposten speichert, welcher vom Benutzer auswechselbar ist, um den Code eines festlegbaren Abschnittes der Codesequenz zu verändern.

4. Tragbare elektronische Kennungsvorrichtung gemäß Anspruch 3, dadurch gekennzeichnet, daß ein anderer Speicherabschnitt (52) einen vom Benutzer als Ergänzung zu den festen Kennungsdaten festlegbaren Datenposten speichert.

5. Tragbare elektronische Kennungsvorrichtung gemäß Anspruch 3, dadurch gekennzeichnet, daß ein anderer Speicherabschnitt (54) einen in zwei unterschiedliche Zustände versetzbaren Datenposten speichert, welcher eine Zustand eine Notfallsituation in dem festlegbaren Abschnitt der Codesequenz darstellt, und weiter gekennzeichnet durch eine vom Benutzer betätigbare Vorrichtung (21), welche an den anderen Speicherabschnitt (54) gekoppelt ist, um dessen auswechselbaren Datenposten in den einen Zustand zu versetzen.

6. Tragbare elektronische Kennungsvorrichtung gemäß Anspruch 5, weiterhin gekennzeichnet durch

einen in Zustände relativ hoher und niedriger Leistung versetzbaren Leistungsverstärker (65), welcher über die vom Benutzer betätigbare Vorrichtung (21) gekoppelt (21B) ist, um in den Zustand hoher Leistung versetzbar zu sein, wenn der in dem anderen Schaltkreisabschnitt (54) gespeicherte Datenposten in den einen Zustand versetzt wird.

7. Tragbare elektronische Kennungsvorrichtung gemäß Anspruch 5 oder 6, gekennzeichnet durch

eine weitere Frequenzquelle (95), welche bei einer von der primären Frequenz verschiedenen Frequenz betreibbar ist; und

eine Schaltvorrichtung (64), durch welche der Eingansanschluß des Modulators (62) an die primäre Frequenzquelle angeschlossen ist und welche durch Betätigung der vom Benutzer betätigbaren Vorrichtung in Betrieb setzbar ist, um den Modulatoreingangsanschluß mit der weiteren Frequenzquelle zu verbinden und den Modulatoreingangsanschluß von der primären Frequenzquelle abzutrennen.

8. Tragbare elektronische Kennungsvorrichtung gemäß Anspruch 3, weiterhin gekennzeichnet durch

eine Energiequelle (12) zur Versorgung des Schaltkreises mit elektrischer Energie, und dadurch, daß der andere Speicherabschnitt Speicherelemente umfaßt, welche den gespeicherten Datenposten bei Verlust der Energie von der Energiequelle sichern.

9. Tragbare elektronische Kennungsvorrichtung gemäß einem der voranstehenden Ansprüche, weiterhin gekennzeichnet durch

einen elektroakustischen Übertrager (25) und weitere Koppelvorrichtungen (91 und 92), welchen den Übertrager (25) an die selektive Koppelvorrichtung (34—37 und 60) zur Erzeugung von Audiofrequenzen, welche den sekundären Frequenzen entsprechen und zur Übertragung in einem Telefonnetz geeignet sind, in dem Übertrager koppeln.

10. Kennungssystem, welches eine tragbare Kennungsvorrichtung gemäß einem der Ansprüche 1 bis 9 und in Kombination hiermit eine Empfangseinheit zum Empfang der modulierten Trägerfrequenz aufweist, welche Empfangseinheit

Vorrichtungen (104 und 105) zur Feststellung der Modulationsfrequenzen auf dem Träger;

eine Vorrichtung (110) zur Umwandlung der festgestellten Modulationsfrequenzen in eine Codesequenz von digitaler Form, die der in der Kennungsvorrichtung verwendeten Codierung entspricht;

eine Speichervorrichtung (130) zur Speicherung der Codesequenz digitaler Form;

eine Vergleichervorrichtung (131, 132, 135, 140 und 141), welche mit der Speichervorrichtung (130) verbunden ist, um eine dort gespeicherte Codesequenz mit festlegbaren Daten zu vergleichen und van dem Ergebnis des Vergleiches abhängige Signale zu erzeugen, um die Kennungsvorrichtung, von welcher die Codesequenz empfangen wird, zu identifizieren, umfaßt.

11. Kennungssystem gemäß Anspruch 10, dadurch gekennzeichnet,

daß die Speichervorrichtung (130) der Empfangseinheit ein Schieberegister umfaßt;

und daß die Empfangseinheit einen phasengekoppelten Oszillator (121) aufweist, welcher an die Wandlervorrichtung (110) angeschlossen ist, um von deren Ausgang Verschiebungssignale zur Verschiebung der Codesequenz digitaler Form in das Schieberegister abzuleiten.

12. Verwendung einer Empfangseinheit zum Empfang der modulierten Trägerfrequenz von einer Kennungsvorrichtung gemäß Anspruch 1, um daraus die Kennungsvorrichtung zu identifizieren, wobei die Empfangseinheit

Vorrichtungen (104 und 105) zur Feststellung der Modulationsfrequenzen auf dem empfangenen Träger;

eine Vorrichtung (110) zur Wandlung der festgestellten Modulationsfrequenzen in eine Codesequenz digitaler Form, die der in der Kennungsvorrichtung verwendeten Codierung entspricht;

ein Schieberegister (130) zur Speicherung der Codesequenz digitaler Form;

einen phasengekoppelten Oszillator (121), welcher an die Wandlervorrichtung zur Ableitung von Verschiebesignalen von den Signalen digitaler Form zur Verschiebung der Codesequenz digitaler form in das Schieberegister angeschlossen ist; und

eine Vergleichsvorrichtung, welche an das Schieberegister angeschlossen ist, um eine gespeicherte Codesequenz digitaler Form mit festlegbaren Daten zu vergleichen und von dem Ergebnis des Vergleiches abhängende Signale bereitzustellen, um die Kennungsvorrichtung zu identifizieren, von welcher die Empfangseinheit die modulierte Trägerfrequenz empfängt, umfaßt.

FIG. 1.

FIG. 3.

FIG. 2.

FIG. 4.

FIG. 5.

FIG. 6.